# FASCICULE DE BREVET EUROPEEN

(11) **EP 2 232 715 B1**
(45) Date de publication et mention de la délivrance du brevet: **07.09.2016**
(21) Numéro de dépôt: 08852488.9
(22) Date de dépôt: 21.11.2008
(51) Int. Cl.: H04B 1/28, H04B 1/40

(54) **SYSTÈME DE CONVERSION D'UN SIGNAL POUR ÉMETTRE OU RECEVOIR UN SIGNAL RADIOFRÉQUENCE**
SIGNALUMSETZUNGSSYSTEM ZUM SENDEN ODER EMPFANGEN EINES HOCHFREQUENZSIGNALS
SIGNAL CONVERSION SYSTEM FOR SENDING OR RECEIVING A RADIOFREQUENCY SIGNAL

(30) Priorité: 23.11.2007 FR 0759260
(43) Date de publication de la demande: 29.09.2010
(73) Titulaire: Semtech International AG, 8640 Rapperswil (CH)
(72) Inventeur: PERRAUD, Laurent, Acton Massachusetts 07120 (US); SORNIN, Nicolas, F-38700 La Tronche (FR)
(74) Mandataire: Hautier, Nicolas
(86) Numéro de dépôt international: PCT/EP2008/065955
(87) Numéro de publication internationale: WO 2009/065916

(56) Documents cités:
- US-B1- 6 298 227
- US-B1- 6 463 266

## Description

La présente invention concerne un système de conversion d'un signal radiofréquence. Plus particulièrement, l'invention se rapporte à un système de conversion d'un signal radiofréquence permettant de récupérer une information encodée et portée par un signal analogique et/ou permettant d'émettre un signal analogique radiofréquence portant une information issue d'un signal numérique.

L'invention est destinée à être utilisée dans de multiples applications impliquant une communication radiofréquence. Elle s'avère par exemple particulièrement avantageuse pour des applications touchant au domaine de la communication sans fil grand public. De manière générale, elle s'appliquera à tous les types d'applications nécessitant une synthèse de fréquence pour recevoir ou émettre un signal encodé sur une porteuse.

De manière connue, la synthèse d'un signal radiofréquence est assurée par un synthétiseur de fréquence qui a pour fonction de générer un signal sinusoïdal S_{LO}.

Lorsque le système opère en réception, ce signal sinusoïdal S_{LO} est destiné à être combiné avec un signal analogique reçu pour permettre de récupérer l'information encodée et portée par ce dernier.

Lorsque le système opère en émission, ce signal sinusoïdal S_{LO} est destiné à être combiné avec un signal analogique issu d'un signal numérique contenant ladite information.

Selon le domaine d'application auquel est destiné un système de conversion de signal radiofréquence, la conception de ce dernier nécessite de satisfaire tout ou partie des critères suivants:
- La pureté : la pureté ou pureté spectrale caractérise la qualité du signal S_{LO} généré par le synthétiseur de fréquence. Plus ce signal S_{LO} contient des signaux autres que le signal sinusoïdal S₀ idéal pour effectuer la conversion (harmoniques ou signaux de tonalités différentes), plus les performances du système de conversion sont dégradées.
- Le bruit de phase : le bruit de phase caractérise les écarts aléatoires entre la phase du signal S_{LO} réellement généré par le synthétiseur de fréquence et la phase du signal sinusoïdal S₀ idéal pour effectuer la conversion.
- Le coût : le coût d'un système de conversion de signal radiofréquence est étroitement lié à la surface de silicium qu'il occupe. Il faut donc chercher à minimiser cette surface occupée pour réduire le coût du système de conversion de signal radiofréquence.

Pour générer un signal sinusoïdal S_{LO} plusieurs types de système de synthèse de signal radiofréquence ont été proposés. Ces types de système de synthèse mettent en oeuvre des synthétiseurs de fréquence qui peuvent être classés en deux familles principales: les synthétiseurs de fréquence analogiques à boucle à verrouillage de phase généralement désignés par PLL (Phase-Locked-Loop) et les synthétiseurs de fréquence numériques généralement désignés par leur acronyme anglo-saxon ADPLL (All Digital Phase-Locked-Loop).

Un synthétiseur de fréquence conventionnel de type PLL comporte un oscillateur contrôlé en tension, habituellement désigné VCO (Voltage Controlled Oscillator) et dont le rôle est de générer un signal sinusoïdal S_{LO}. Il comprend également un diviseur haute fréquence permettant de diviser la fréquence du signal S_{LO} par un facteur N. Un comparateur de phase détermine la différence entre la phase du signal en sortie du diviseur et la phase d'un signal de référence dont la fréquence est connue et stable. Ce signal de référence S_{Ref} est habituellement généré par un oscillateur à cristal ou un oscillateur à quartz. Le comparateur de phase génère un signal V_{ctrl} reflétant ladite différence de phase. Le signal V_{ctrl} est ensuite filtré par un filtre passe bas avant d'être injecté en entrée du VCO. Ainsi la boucle converge de manière à ce que la fréquence générée par le VCO se rapproche de la fréquence du signal de référence S_{Ref} multipliée par N.

Dans ce type de PLL l'ensemble des fréquences que l'on peut obtenir en sortie de VCO est l'ensemble des fréquences du signal de référence S_{Ref} multipliées par N. Il convient donc de choisir un signal de référence dont la fréquence est égale à l'espacement entre canaux que l'on veut utiliser (généralement quelques KHz à quelques MHz).

Pour contourner cette contrainte liée à la fréquence de référence il a été proposé des synthétiseurs de fréquence de type PLL comportant un diviseur de fréquence dont le ratio de division est modulable sur quelques valeurs entières centrées autour du ratio de division moyen N. L'ensemble des fréquences atteignables n'est alors plus limité aux fréquences du signal de référence S_{Ref} multipliées par N.

Cependant, un tel diviseur de fréquence tend à générer un bruit qui implique une limitation de la bande passante de la PLL. Ce bruit ne peut être réduit qu'au prix d'une importante surconsommation énergétique du diviseur.

Un synthétiseur de fréquence numérique ADPLL comporte un VCO dont la sortie est convertie en un signal numérique par un convertisseur analogique/numérique. Le ADPLL comprend également un diviseur numérique de fréquence, un comparateur de phase numérique, un filtre passe bas numérique et un convertisseur numérique/analogique successivement disposés depuis la sortie du convertisseur analogique/numérique jusqu'au VCO de manière à former une boucle numérique. Le diviseur numérique divise la fréquence du signal numérique généré par le convertisseur analogique/numérique. Le comparateur de phase numérique détermine la différence entre la phase du signal en sortie du diviseur et la phase d'un signal de référence et génère un signal numérique Vctrl reflétant ladite différence de phase.

Le signal Vctrl est ensuite filtré par le filtre passe bas numérique avant d'être converti en un signal analogique par le convertisseur numérique/analogique. Le signal analogique est alors injecté en entrée du VCO.

Dans d'autres types d'ADPLL, le signal numérique Vctrl issu d'un convertisseur de phase numérique et d'un filtre passe bas numérique module un oscillateur contrôlé numériquement. Ce type d'oscillateur est usuellement désigné par son acronyme anglo-saxon DCO (Digitally Controlled Oscillator). Il reçoit pour entrée un signal numérique. Avantageusement, les ADPLL prévoient une modulation à la fois d'un VCO et d'un DCO.

Dans les ADPLL connus, le comparateur de phase génère habituellement des bruits significatifs, ce qui impose des contraintes sur la largeur de la bande passante du filtre. Les ADPLL connus nécessitent par conséquent d'effectuer un compromis entre pureté et agilité, l'agilité dépendant étroitement de la largeur de la bande passante du filtre. Par ailleurs, les ADPLL connus ne permettent pas de générer des fréquences élevées supérieures typiquement à 3 Ghz. Il résulte des ces contraintes que l'utilisation des ADPLL connus est aujourd'hui limitée à quelques applications très spécifiques.

Par ailleurs, la qualité du convertisseur numérique/analogique conditionne directement le signal d'entrée du VCO. Or, les performances des convertisseurs numérique/analogique connus ne permettent pas de générer un signal suffisamment précis pour obtenir une pureté satisfaisante en sortie de synthétiseur de fréquence.

En outre, l'utilisation d'un DCO limite considérablement la précision de la modulation dans les synthétiseurs de fréquence de type ADPLL.

Le document US6463266 décrit un émetteur-récepteur avec oscillateur local commun pour les chaînes TX et RX. Un estimateur d'erreur de fréquence et de commande automatique de fréquence dérive à partir du signal reçu un signal de correction à appliquer à un bloc rotateur de phase les branches TX et RX.

La présente invention vise à limiter au moins l'un des inconvénients associés à chacun des systèmes de conversion de signal précités. En particulier, à performances égales, un système de conversion selon l'invention implique un coût de production sensiblement plus faible qu'un système de conversion connu.

Par ailleurs, l'invention vise à améliorer la pureté et/ou l'agilité des systèmes de conversion connus sans pour autant en augmenter le coût de production.

Pour atteindre cet objectif, il est prévu selon l'invention : un système de conversion d'un signal S_{RX} radiofréquence reçu pour récupérer l'information encodée et portée par le signal S_{RX}, comprenant :
- des moyens de génération agencés de manière à générer un signal S_{LO}.
- des moyens de mixage agencés de manière à générer un signal S_{RX-LO} en mixant le signal S_{RX} avec le signal S_{LO},
- un convertisseur analogique/numérique agencé pour convertir le signal S_{RXLO} en un signal numérique S_{RX-LO-Num},
- un dispositif générant un signal numérique S_{Cor} de correction d'erreur, le dispositif étant agencé de manière à ce que le signal S_{Cor} reflète l'écart de phase entre la phase du signal S_{LO} et une consigne de phase, la consigne de phase étant la phase d'un signal idéal S₀, idéal pour récupérer l'information encodée et portée par le signal S_{RX},
- des moyens de combinaison agencés pour générer le signal S_{0'-Num} en combinant le signal S_{RX-LO-Num} avec le signal S_{Cor}.

Ainsi, le système de conversion selon l'invention permet de générer un signal S_{0'}-_{Num} identique ou très proche d'une combinaison du signal idéal S₀ et du signal S_{RX} reçu et portant l'information à récupérer.

Le signal S_{Cor} de correction d'erreur reflétant l'écart de phase entre le signal idéal S₀ et le signal S_{LO} généré par les moyens de génération n'est pas appliqué à l'entrée de ces derniers comme c'est le cas dans les synthétiseurs de fréquence connus. L'invention ne prévoit aucune rétroaction sur les moyens de génération eux-mêmes mais assure une correction de type action directe au niveau du signal reçu par le système et mélangé au signal généré par les moyens de génération.

Cette architecture particulière du synthétiseur de fréquence offre de nombreux avantages.

Elle autorise une oscillation libre des moyens de génération. Par conséquent l'invention permet de se passer d'un filtre analogique en entrée des moyens de génération. Dans les synthétiseurs conventionnels avec boucle à verrouillage de phase un tel filtre est indispensable en entrée d'oscillateur. Or ce filtre analogique occupe une surface de silicium substantielle par rapport à l'ensemble de la surface de silicium occupée par le synthétiseur de fréquence. Par conséquent, la suppression de ce filtre analogique entraîne une diminution sensible de la surface occupée de silicium et permet de réduire de manière très significative le coût d'obtention du synthétiseur.

D'autre part, le demandeur a relevé que le filtre contribue de manière substantielle au bruit de phase généré.

Par ailleurs, le demandeur a identifié que dans les systèmes de conversion connus équipés d'une PLL, le VCO génère des harmoniques aux fréquences multiples de celle du signal de référence S_{Ref}. Or, l'invention ne prévoit pas d'asservissement au niveau des moyens de génération. Ces derniers ne reçoivent donc pas comme entrée un signal de référence et ne génèrent ainsi pas d'harmoniques dus à un tel signal.

En outre, le demandeur s'est aperçu que dans les PLL le bruit de phase généré par la référence et le bruit introduit par le comparateur de phase se trouvent multipliés par un facteur N à la sortie du VCO. Il en résulte un bruit multiplié par N au niveau du signal récupéré en sortie du système de conversion.

Or, l'invention n'utilise pas de diviseur de fréquence en entrée des moyens de génération. Elle ne multiplie donc pas la contribution du bruit de phase de la référence ou du comparateur de phase par N au niveau des moyens de génération. Par rapport aux systèmes de conversion connus avec PLL, le système de conversion selon l'invention peut donc supporter un niveau de bruit plus élevé sur le signal de référence S_{Ref}. Ainsi, pour des systèmes de conversion présentant des performances identiques, l'invention permet d'utiliser une référence moins performante et donc moins onéreuse que dans les systèmes de conversion existants.

Il est en outre prévu selon l'invention un système de conversion d'un signal numérique S_{TX-Num} pour émettre un signal analogique S_{TX} radiofréquence portant l'information du signal S_{TX-Num}, comprenant:
- des moyens de génération agencés de manière à générer un signal S_{LO}.
- un dispositif générant un signal numérique S_{Cor} de correction d'erreur, le dispositif étant agencé de manière à ce que le signal S_{Cor} reflète l'écart de phase entre la phase du signal S_{LO} et une consigne de phase, la consigne de phase étant la phase d'un signal idéal S₀, idéal pour transposer le signal S_{TX-Num} à une fréquence requise en vue de son émission,
- des moyens de combinaison agencés pour générer le signal S_{TX-Cor-Num} en combinant le signal S_{TX-Num} avec le signal S_{Cor}.
- un convertisseur numérique/analogique agencé pour convertir le signal numérique S_{TX-Cor-Num} en un signal analogique S_{TX-Cor},
- des moyens de mixage agencés de manière à générer un signal S_{TX} en mixant le signal S_{TX-Cor} avec le signal S_{LO}.

Ainsi, le système de conversion selon l'invention permet de générer un signal S_{TX} identique ou très proche d'une combinaison du signal idéal S₀ et du signal S_{TX-Num} portant l'information à émettre.

Ce système de conversion opérant en émission repose sur les mêmes principes et offre les mêmes avantages que le système de conversion opérant en réception décrit précédemment.

En effet, qu'il soit destiné à opérer en réception ou en émission, un système de conversion selon l'invention ne prévoit aucune rétroaction sur les moyens de génération eux-mêmes et présente un dispositif agencé de manière à effectuer une correction de type action directe au niveau du signal portant l'information à recevoir ou à émettre.

Un système de conversion selon l'invention qu'il soit destiné à opérer en réception ou en émission pourra en outre présenter au moins facultativement l'une quelconque des caractéristiques suivantes :
- il comprend des moyens de génération d'un signal de référence S_{Ref}, des moyens d'échantillonnage ayant pour entrée le signal S_{LO} et le signal S_{Ref} et agencés pour générer un signal numérique S_{LO-Num}, représentation numérique du signal S_{LO},
- les moyens d'échantillonnage comportent un échantillonneur de phase et en ce que le signal S_{LO-Num}, est une représentation numérique de la phase du signal S_{LO},
- le dispositif comprend au moins une entrée agencée pour recevoir les caractéristiques du signal idéal S₀, au moins une entrée agencée pour recevoir le signal numérique S_{LO-Num}, des moyens de calcul de l'erreur de phase instantanée entre le signal S_{LO} et le signal S₀, des moyens de génération du signal numérique S_{Cor} présentant une phase inverse de ladite erreur de phase,
- le dispositif comprend des moyens d'interface agencés de manière à faire varier les caractéristiques du signal idéal S₀,
- le dispositif comprend des moyens numériques de filtrage agencés pour filtrer le signal numérique S_{Cor},
- le dispositif est agencé de manière à ce que les moyens numériques de filtrage comprennent au moins un filtre dont la largeur de la bande passante est réglable,
- le dispositif comprend des moyens de correction agencés de manière à corriger les imperfections des moyens d'échantillonnage.

En outre, il est prévu selon l'invention un système de conversion d'un signal numérique apte à recevoir et à émettre un signal analogique radiofréquence comprenant les caractéristiques d'un système de conversion opérant en réception selon l'invention et les caractéristiques d'un système de conversion opérant en émission selon l'invention.

On prévoit également selon l'invention un procédé de conversion d'un signal S_{RX} radiofréquence reçu pour récupérer l'information encodée et portée par le signal S_{RX}, comprenant les étapes suivantes :
- on génère un signal S_{LO},
- on génère un signal S_{RX-LO} en mixant le signal S_{RX} avec le signal S_{LO},
- on convertit le signal S_{RX-LO} en un signal numérique S_{RX-LO-Num},
- on génère un signal numérique S_{Cor} de correction d'erreur reflétant l'écart de phase entre la phase du signal S_{LO} et une consigne de phase, la consigne de phase étant la phase d'un signal idéal S₀, idéal pour récupérer l'information encodée et portée par le signal S_{RX},
- on génère un signal S_{0'-Num} en combinant le signal S_{RX-LO-Num} avec le signal S_{Cor}.

Pour assurer l'émission d'une information issue d'un signal numérique S_{TX-Num}, on prévoit un procédé de conversion du signal numérique S_{TX-Num} en un signal analogique S_{TX} radiofréquence, le procédé comprenant les étapes suivantes :
- on génère un signal S_{LO},
- on génère un signal numérique S_{Cor} de correction d'erreur reflétant l'écart de phase entre la phase du signal S_{LO} et une consigne de phase, la consigne de phase étant la phase d'un signal idéal S₀, idéal pour transposer le signal S_{TX-Num}, à une fréquence requise en vue de son émission,
- on génère un signal numérique S_{TX-Cor-Num} en combinant le signal S_{TX-Num} avec le signal S_{Cor},
- on convertit le signal S_{TX-Cor-Num} en un signal analogique S_{TX-Cor},
- on génère un signal S_{TX} en mixant le signal S_{TX-Cor} avec le signal S_{LO}.

D'autres caractéristiques, buts et avantages de la présente invention apparaîtront à la lecture de la description détaillée qui va suivre et au regard des dessins annexés donnés à titre d'exemple non limitatif et sur lesquels :
- La figure 1 est un schéma simplifié d'un exemple de système de conversion selon l'invention destiné à assurer la réception d'un signal radiofréquence,
- La figure 2 est un schéma simplifié d'un exemple de système de conversion selon l'invention destiné à assurer l'émission d'un signal radiofréquence,
- La figure 3 est un schéma simplifié d'un exemple de système de conversion selon l'invention destiné à opérer en émission et en réception.

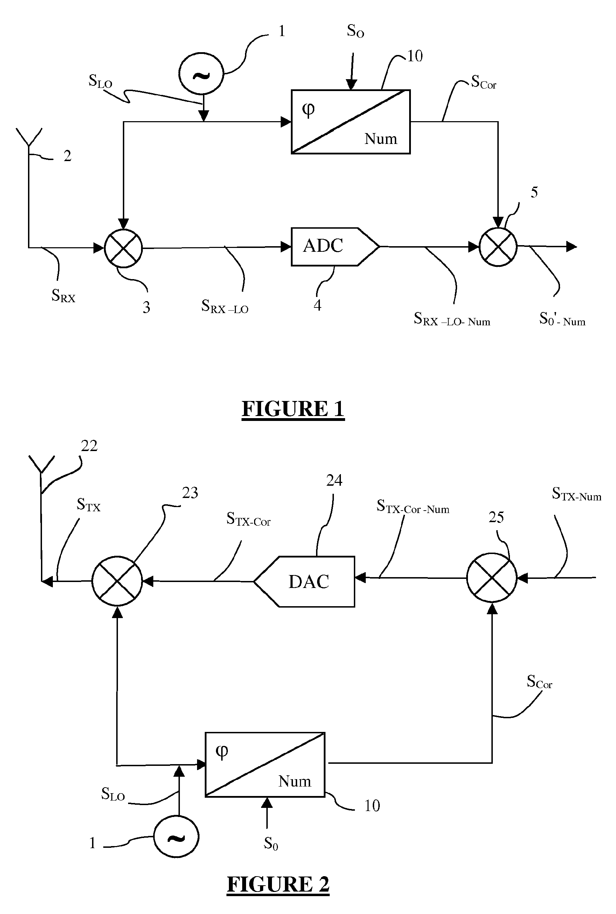

Un système de conversion selon l'invention opérant en réception va maintenant être décrit en référence à la figure 1.

Le système comporte des moyens de génération 1 permettant de générer un signal sinusoïdal, des moyens de réception 2 d'un signal radiofréquence, des moyens de mixage 3 de deux signaux analogiques, des moyens de conversion 4 d'un signal analogique en un signal numérique, des moyens de combinaison 5 agencés de manière à générer un signal de sortie par combinaison de deux signaux d'entrée, ainsi qu'un dispositif 10 agencé de manière à générer un signal de correction d'erreur.

Les moyens de génération 1 comportent un oscillateur. Ce dernier peut par exemple être commandé numériquement (oscillateur de type Digitally Controlled Oscillator dont l'acronyme est DCO) ou peut être commandé en tension (oscillateur de type (Voltage Controlled Oscillator dont l'acronyme est VCO). Ces moyens 1 génèrent un signal sinusoïdal S_{LO} dont la fréquence désignée F_{LO} peut osciller librement. De manière préférée, cette fréquence F_{LO} peut être contrôlée au moins grossièrement de manière à osciller librement dans un intervalle de fréquences. Cet intervalle de fréquences peut être centré autour d'une fréquence souhaitée. Avantageusement ce contrôle est effectué grâce à une interface numérique. Les moyens de réception 2 sont agencés de manière à recevoir un signal radiofréquence S_{RX}. Ils comprennent tous types de source de signal radiofréquence à démoduler. A titre d'exemple non limitatif ces moyens de réception comprennent une antenne. Le système de conversion est agencé de manière à ce que le signal S_{LO} généré par l'oscillateur soit mixé avec le signal S_{RX} issu des moyens de réception. Ce mixage est assuré par les moyens de mixage 3. Ces derniers peuvent comprendre un mixer conventionnel.

Les moyens de mixage 3 délivrent un signal analogique désigné S_{RX-LO}. Le signal S_{RX-LO} est converti en un signal numérique S_{RX-LO-Num} par les moyens de conversion 4 analogique / numérique.

Le système de conversion est agencé de manière à ce que le signal S_{LO} généré par l'oscillateur soit injecté également en entrée du dispositif 10.

Le dispositif 10 comporte des moyens de représentation délivrant une représentation numérique de la phase ϕ_{LO} du signal S_{LO}. Avantageusement, le dispositif 10 comprend une référence 2 apte à fournir un signal de référence S_{Ref}. Cette référence 2 peut par exemple comporter un oscillateur à cristal ou un oscillateur à quartz.

Les moyens de représentation comprennent des moyens d'échantillonnage recevant en entrée le signal S_{LO} et le signal S_{Ref} et fournissant une représentation numérique de la phase instantanée du signal S_{LO} à chaque front montant du signal S_{Ref}.

Le dispositif 10 reçoit également en entrée une consigne. Plus précisément cette consigne est une consigne de phase désignée ϕ₀. ϕ₀ est la phase d'un signal idéal S₀, idéal pour récupérer l'information encodée et portée par le signal S_{RX}. Ce dispositif 10 comporte des moyens de calcul agencés de manière à calculer l'écart de phase entre la phase ϕ_{LO} du signal S_{LO} et la phase ϕ₀ du signal S₀. Le dispositif 10 comprend également des moyens aptes à générer un signal numérique de correction d'erreurs S_{Cor} reflétant ledit écart de phase. Plus précisément, le signal S_{Cor} présente une phase inverse à l'écart calculé.

Les moyens de combinaison 5 reçoivent en entrée le signal numérique S_{Cor} et le signal S_{RX-LO Num} et génèrent en sortie le signal S_{0'-Num}. Ce signal S_{0'-Num} est destiné à être ultérieurement traité pour extraire et utiliser l'information qu'il comporte, au moyen d'un modem par exemple.

Ainsi le synthétiseur selon l'invention permet de générer un signal S_{0'-Num} identique ou très proche d'une combinaison du signal S₀ et du signal S_{RX} reçu et portant l'information récupérée au niveau de l'antenne. Le signal S_{Cor} reflétant l'écart de phase entre le signal idéal S₀ et le signal S_{LO} généré par l'oscillateur n'est pas appliqué à l'entrée de ce dernier comme c'est le cas dans les synthétiseurs de fréquence connus.

L'invention ne prévoit aucune rétroaction sur l'oscillateur lui-même mais assure une correction de type action directe au niveau du signal reçu par le système et mélangé au signal généré par l'oscillateur.

En autorisant une oscillation libre de l'oscillateur, l'invention permet de se passer d'un filtre analogique en entrée d'oscillateur. Elle permet aussi de diminuer sensiblement la surface occupée du silicium. Par conséquent, elle permet de réduire de manière très significative le coût d'obtention du système de conversion.

Par ailleurs, le demandeur a identifié que dans les systèmes de conversion connus équipés d'une PLL, l'oscillateur commandé en tension génère des harmoniques aux fréquences multiples de celles du signal de référence S_{Ref}. Dans les systèmes de conversion connus puisque l'oscillateur ne reçoit pas en entrée un signal de référence, il ne génère pas d'harmonique due à un tel signal.

En outre, l'invention n'utilise pas de diviseur de fréquence en entrée d'oscillateur. Elle ne multiplie donc pas la contribution du bruit de phase de la référence ou du comparateur de phase par N au niveau de la sortie de l'oscillateur. Par rapport aux systèmes de conversion connus intégrant une PLL, le système de conversion selon l'invention peut donc supporter un niveau de bruit plus élevé sur le signal de référence S_{Ref}. Ainsi pour des systèmes de conversion présentant des performances identiques, l'invention permet d'utiliser une référence de fréquence moins performante et donc moins onéreuse comparativement aux systèmes de conversion connus.

Par ailleurs, un système de conversion selon l'invention et équipé d'une référence identique à un système de conversion conventionnel permet d'optimiser librement la largeur de la bande passante et offre par conséquent des performances significativement améliorées.

Avantageusement, le dispositif comprend des moyens d'interface agencés de manière à faire varier les caractéristiques du signal idéal S₀. Ainsi, en faisant varier la phase ϕ₀ du signal S₀ idéal, le système de conversion peut couvrir toutes les fréquences indépendamment de la fréquence F_{Ref} du signal de référence S_{Ref}

Par ailleurs, l'invention ne présente pas les inconvénients découlant du système de conversion connu intégrant une PLL de type fractionnaire opérant une modulation du ratio de division N. En effet, l'invention ne comprend pas de moyens de modulation du ratio de division N. Or, dans les PLL fractionnaires ces moyens de modulation génèrent un bruit important qui réduit substantiellement leurs performances en termes de pureté, de consommation d'énergie ou de bande passante.

De manière avantageuse, le système comprend des moyens numériques de filtrage. Ces moyens numériques de filtrage comportent au moins un filtre numérique agencé de manière à filtrer le signal S_{Cor} avant que ce dernier soit multiplié avec le signal S_{RX-LO-Num.}

Par ailleurs et de manière facultative, les moyens numériques sont agencés de manière à ce que les caractéristiques du filtrage soient modifiables. Notamment, on prévoit que la bande passante du filtre numérique soit réglable.

Ainsi, la bande passante du filtre peut être dynamiquement modifiée sans perturber l'oscillateur contrairement aux systèmes de conversion existants équipés de PLL. Le dispositif 10 peut ainsi augmenter la largeur de sa bande passante lors d'un changement de fréquence puis revenir à sa largeur optimale pour minimiser le bruit et sans pour autant perturber le système de conversion. Les réglages commandés et rapides de la bande passante permettent au système de changer très rapidement de fréquence. Le système de conversion selon l'invention présente ainsi une agilité significativement améliorée par rapport aux systèmes de conversion connus.

De manière préférée, le dispositif comporte des moyens de correction agencés de manière à corriger les imperfections des moyens d'échantillonnage. Ces moyens de correction permettent de corriger la représentation numérique S_{LO-Num} du signal S_{LO}, avant que le signal S_{LO-Num} soit comparé au signal de consigne.

De plus, dans l'invention, la bande passante du dispositif est librement fixée par le filtre numérique appliqué au signal S_{Cor}. Ainsi, il n'y aucune contrainte de stabilité ou de pureté spectrale de l'oscillateur limitant cette bande passante. La seule limitation provient du bruit de phase de l'échantillonneur de phase et ne résulte donc que d'une optimisation globale du bruit de phase en fonction de l'application souhaitée.

En outre, le système de conversion selon l'invention ne requiert aucun composant ou ensemble de composants analogiques non présents dans une architecture de système de conversion conventionnel équipé d'une PLL, à l'exception de l'échantillonneur de phase qui remplace le comparateur de phase dans une PLL. Or, lorsqu'il s'agit de concevoir un système de conversion pour une application donnée, l'essentiel des coûts de développement est induit par la conception des blocs analogiques. L'adaptation d'une application à une autre du système de conversion selon l'invention ne demande essentiellement qu'une modification des caractéristiques permettant de générer le signal de correction S_{Cor}. Une telle modification s'effectue dans le domaine numérique et n'implique pas de coût substantiel.

Un système de conversion selon l'invention opérant en émission va maintenant être décrit en référence à la figure 2.

Le système de conversion opérant en émission comporte :
- des moyens de génération 1 permettant de générer un signal sinusoïdal S_{LO},
- des moyens de mixage 23 de deux signaux analogiques,
- des moyens de combinaison 25 de signaux numériques :
- des moyens de conversion 24 d'un signal numérique en un signal analogique
- des moyens d'émission 22 d'un signal analogique,
- un dispositif 10 agencé de manière généré un signal S_{Cor} de correction d'erreurs.

Le signal S_{LO} dont la fréquence peut osciller librement et qui est délivré par les moyens de génération 1 est injecté en entrée du dispositif 10. Ce dernier est agencé de manière à ce que le signal de correction d'erreurs S_{Cor} reflète l'écart de phase entre le signal S_{LO} et un signal idéal S₀, le signal idéal S₀ étant le signal idéal pour transposer un signal à émettre S_{TX-Num} à une fréquence requise en vue de son émission.

Le signal S_{Cor} est combiné avec un signal S_{TX-Num} pour générer le signal numérique S_{TX-Cor-Num}. Le signal numérique S_{TX-Num} porte l'information à émettre et provient par exemple d'un modem.

Le signal S_{TX-Cor-Num} est ensuite converti en un signal analogique S_{TX-Cor} par le convertisseur numérique analogique 24.

A niveau des moyens de mixage 23, le signal S_{TX-Cor} est ensuite mixé avec le signal S_{LO} généré par l'oscillateur oscillant librement pour générer le signal analogique S_{TX}. Ce signal S_{TX} porte l'information à émettre et présente la fréquence requise en vue de son émission ultérieure par les moyens d'émission 22. Ces moyens d'émission 22 peuvent par exemple comprendre, de manière non limitative, une antenne.

Ce système de conversion opérant en émission repose sur les mêmes principes que le système de conversion opérant en réception décrit précédemment en référence au schéma simplifié de la figure 1. En particulier, les moyens de génération 1, les moyens de mixage 23 et le dispositif 10 peuvent être similaires à ceux du système de conversion opérant en réception. On se référera donc à l'exemple précédent pour une description détaillée de ces éléments.

Le système de conversion opérant l'émission présente également les mêmes avantages que le système de conversion opérant en réception qui a été décrit précédemment.

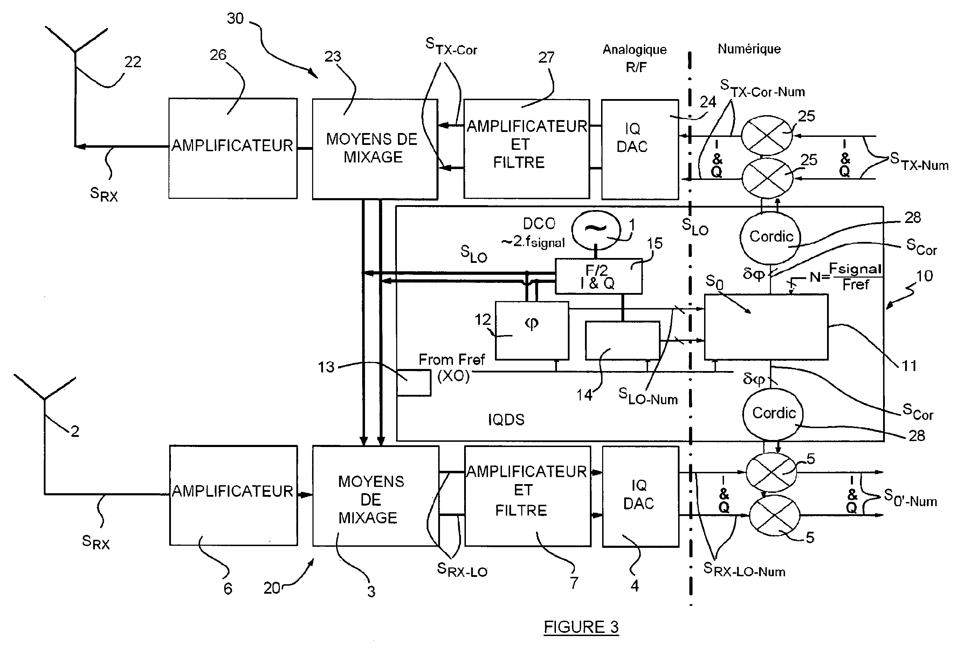

En référence à la figure 3, on va maintenant décrire un système de conversion selon l'invention agencé de manière à pouvoir opérer aussi bien en émission qu'en réception. Ce système de conversion combine les caractéristiques du système de conversion opérant en réception et du système de conversion opérant en émission décrits précédemment.

Le système de conversion comprend des moyens de génération 10 permettant de générer un signal S_{LO} sinusoïdal, un dispositif 10 agencé de manière à générer un signal S_{Cor} de correction d'erreur, une chaîne de réception 20 et une chaîne d'émission 30. Avantageusement, la fréquence F_{LO} peut osciller librement.

Dans cet exemple de réalisation les moyens de génération 10 comprennent un oscillateur contrôlé numériquement (DCO).

Lorsqu'il opère en réception ce système de conversion fonctionne de la même manière que le système de conversion opérant en réception décrit précédemment en référence au schéma simplifié de la figure 1.

De même, lorsqu'il opère en émission le système de conversion fonctionne de la même manière que le système de conversion opérant en émission décrit précédemment en référence au schéma simplifié de la figure 2.

Ainsi, le signal S_{LO} délivré par les moyens de génération 1 est injecté en entrée du mixer 3 de la chaîne de réception 20, et en entrée du mixer 23 de la chaîne d'émission 30, selon que le système opère en réception ou en émission. De même, le signal de correction S_{Cor} généré par le dispositif 10 est injecté en entrée des moyens de combinaison 5 de la chaîne de réception 20 ou en entrée des moyens de combinaison 25 de la chaîne d'émission 30 selon que le système opère en réception ou en émission.

Ce système de conversion présente les mêmes caractéristiques et offre les mêmes avantages que le système de conversion opérant en émission et que le système de conversion opérant en transmission présentés précédemment.

Par ailleurs, un système de conversion selon l'invention comporte de manière préférée et pour chacune des chaînes d'émission 20 et de réception 30, un amplificateur 6, 26 entre l'antenne 2, 22 et les moyens de mixage 3, 23. Par ailleurs, on pourra prévoir entre le convertisseur 4, 24 et le mixer 3, 23 des moyens 7, 27 agencés de manière à amplifier et à filtrer le signal. Les caractéristiques des moyens 7, 27 et de l'amplificateur 6, 26 seront aisément déterminés en fonction des performances et de l'application souhaitées pour le système de conversion.

Comme le déterminerait aisément un spécialiste du domaine et comme le laisse apparaître la figure 3, les moyens de génération 10 comprennent des moyens de division 15 conventionnels dont le rôle est de diviser le signal en sortie d'oscillateur en deux signaux I et Q en quadrature. Cette division en deux signaux distincts n'est pas représentée sur les figures 1 et 2 par souci de clarté.

Comme représenté sur l'exemple de réalisation de la figure 3, le dispositif 10 comporte également :
- des moyens d'échantillonnage comportant un échantillonneur de phases 12,
- une référence 13 délivrant un signal de référence S_{Ref.,}
- un bloc de correction 11.

L'échantillonneur de phases 12 reçoit en entrée le signal S_{Ref} et au moins un signal parmi I et Q. Il génère à chaque front montant de S_{Ref} un signal S_{LO-Num,} représentation numérique de la phase instantanée du signal S_{LO}. Ce signal S_{LO-Num} est injecté en entrée du bloc de correction 11. Avantageusement, des moyens conventionnels d'initiation et/ou de calibration tels qu'un compteur 14 recevant en entrée le signal S_{Ref} et au moins un signal parmi I et Q permet d'initier le système de conversion. D'autres moyens conventionnels d'initiation et/ou de calibration connus peuvent naturellement être envisagés pour assurer cette initiation.

Préférentiellement, le bloc de correction 11 comprend des moyens de correction agencés de manière à corriger les imperfections des moyens d'échantillonnage en effectuant notamment une linéarisation du signal S_{LO-Num.} Le bloc de correction 11 présente également deux entrées sur lesquelles sont respectivement portées le signal S_{Ref} et le signal idéal S₀. Le bloc de correction 11 comporte également :
- des moyens de calcul de l'écart de phase instantané entre le signal S_{LO} et le signal idéal S₀,
- des moyens de génération d'un signal de correction S_{Cor} numérique reflétant cet écart de phase.

De manière préférée, ce bloc de correction 11 comprend en outre :
- des moyens de filtrage du signal de correction S_{Cor}
- des moyens d'interface agencés pour faire varier les caractéristiques du signal idéal S₀,
- des moyens d'interface agencés pour régler les caractéristiques du filtrage appliqué au signal S_{Cor} en permettant par exemple une modification de la bande passante du filtre.

De manière particulièrement avantageuse l'ensemble des fonctions assurées par le bloc de correction 11 sont mises en oeuvre par des moyens numériques.

Le signal S_{Cor} en sortie du bloc de correction 11 est ensuite injecté dans un CORDIC (Coordinate Protection Digital Computer) générant deux signaux numériques en quadrature. Au niveau des moyens de combinaison 5, 5, 25, 25, ces deux signaux sont respectivement multipliés à l'un parmi les signaux I et Q issus de la chaîne de réception 20 lorsque le système de conversion opère en réception ou injectés en entrée de la chaîne d'émission 30 lorsque le système de conversion opère en émission.

Ainsi, dans un système de conversion selon l'invention, la partie analogique du système effectue une translation en fréquence de manière approximative et non cohérente. En effet, on qualifie habituellement de cohérente, une réception ou une transmission radiofréquence pour laquelle la translation de fréquence est effectuée par un signal issu d'un synthétiseur de fréquence. Dans le cadre de l'invention, ce n'est que lors de l'association entre les signaux issus des parties numériques et analogiques que la cohérence est établie, grâce au contrôle continu des erreurs du signal S_{LO} et à la correction des effets de ces erreurs sur les signaux à recevoir ou à transmettre.

Le système de conversion selon l'invention offre ainsi des performances en terme de pureté et de robustesse améliorées par rapport aux systèmes de conversion connus. Par ailleurs, l'invention permet d'améliorer de manière substantielle l'agilité des systèmes de conversion connus. En outre, l'adaptation d'un système de conversion pour une application donnée nécessite des efforts de développement essentiellement dans le domaine numérique ce qui limite les coûts d'adaptation.

De plus, l'invention permet de réduire sensiblement la surface de silicium occupée et par conséquent le coût des systèmes de conversion connus.

La présente invention n'est pas limitée aux modes de réalisation décrits ci-dessus mais s'étend à tout mode de réalisation conforme à son esprit.

Notamment on pourra prévoir, sans sortir de l'enseignement de l'invention d'utiliser un synthétiseur de fréquence conventionnel de type PLL comme moyen de génération du signal S_{LO} et en lieu et place de l'oscillateur libre prévu dans les exemples décrits précédemment.

### REFERENCES

1. Moyens de génération d'un signal sinusoïdal
2. Moyens de réception
22. Moyens d'émission
3. Moyens de mixage
23. Moyens de mixage
4. Moyens de conversion analogique / numérique
24. Moyens de conversion numérique / analogique
5. Moyens de combinaison
25. Moyens de combinaison
10. Dispositif
6. Amplificateur
26. Amplificateur
7. Moyens d'amplification et de filtrage
27. Moyens d'amplification et de filtrage
8. CORDIC
28. CORDIC
11. Bloc de correction
12. Echantillonneur de phases
13. Référence
14. Compteur
15. Moyens de division
20. Chaîne de réception
30. Chaîne d'émission

## Revendications

1. Système de conversion d'un signal S_{RX} radiofréquence reçu pour récupérer l'information encodée et portée par le signal S_{RX}, comprenant:
- des moyens de génération (1) agencés de manière à générer un signal S_{LO},
- des moyens de mixage (3) agencés de manière à générer un signal S_{RX-LO} en mixant le signal S_{RX} avec le signal S_{LO},
- un convertisseur analogique/numérique (4) agencé pour convertir le signal S_{RXLO} en un signal numérique S_{RX-LO-Num},
- un dispositif (10) générant un signal numérique S_{Cor} de correction d'erreur, le dispositif étant agencé de manière à ce que le signal S_{Cor} reflète l'écart de phase entre la phase du signal S_{LO} et une consigne de phase, la consigne de phase étant la phase d'un signal idéal S₀, idéal pour récupérer l'information encodée et portée par le signal S_{RX},
- des moyens de combinaison (5) agencés pour générer le signal S_{0'-Num} en combinant le signal S_{RX-LO-Num} avec le signal S_{Cor}.

2. Système de conversion d'un signal numérique S_{TX-Num} pour émettre un signal analogique S_{TX} radiofréquence portant l'information du signal numérique S_{TX-Num}, comprenant:
- des moyens de génération (1) agencés de manière à générer un signal S_{LO}
- un dispositif (10) générant un signal numérique S_{Cor} de correction d'erreur, le dispositif étant agencé de manière à ce que le signal S_{Cor} reflète l'écart de phase entre la phase du signal S_{LO} et une consigne de phase, la consigne de phase étant la phase d'un signal idéal S₀, idéal pour transposer le signal S_{TX-Num} à une fréquence requise en vue de son émission,
- des moyens de combinaison (25) agencés pour générer le signal S_{TX-Cor-Num} en combinant le signal S_{TX-Num} avec le signal S_{Cor},
- un convertisseur numérique/analogique (24) agencé pour convertir le signal numérique S_{TX-Cor-Num} en un signal analogique S_{TX-Cor},
- des moyens de mixage (23) agencés de manière à générer un signal S_{TX} en mixant le signal S_{TX-Cor} avec le signal S_{LO}.

3. Système de conversion selon l'une quelconque des revendications 1 ou 2 précédentes, **caractérisé en ce qu'**il comprend:
- des moyens de génération d'un signal de référence S_{Ref},
des moyens d'échantillonnage ayant pour entrée le signal S_{LO} et le signal S_{Ref} et agencés pour générer un signal numérique S_{LO-Num,} représentation numérique du signal S_{LO}.

4. Système de conversion selon la revendication précédente, **caractérisé en ce que** les moyens d'échantillonnage comportent un échantillonneur (12) de phase et **en ce que** le signal S_{LO-Num}, est une représentation numérique de la phase du signal S_{LO}.

5. Système de conversion selon la revendication 3, **caractérisé en ce que** le dispositif comprend:
- au moins une entrée agencée pour recevoir les caractéristiques du signal idéal S₀,
- au moins une entrée agencée pour recevoir le signal numérique S_{LO-Num},
- des moyens de calcul de l'erreur de phase instantanée entre le signal S_{LO} et le signal S₀,
- des moyens de génération du signal numérique S_{cor} présentant une phase inverse de ladite erreur de phase.

6. Système de conversion selon l'une quelconque des revendications 3 à 5, **caractérisé en ce que** le dispositif (10) comprend des moyens de filtrage agencés pour filtrer le signal numérique S_{cor}.

7. Système de conversion selon la revendication précédente, **caractérisé en ce que** les moyens numériques de filtrage comprennent au moins un filtre numérique dont la largeur de la bande passante est réglable.

8. Système de conversion selon l'une quelconque des revendications 3 à 5 et 7, **caractérisé en ce que** le dispositif (10) comprend des moyens de correction agencés de manière à corriger les imperfections des moyens d'échantillonnage,

9. Système de conversion selon l'une quelconque des revendications précédentes, **caractérisé en ce que** le dispositif (10) comprend des moyens d'interface agencés de manière à faire varier les caractéristiques du signal idéal S₀.

10. Système de conversion d'un signal numérique apte à recevoir et émettre un signal analogique radiofréquence comprenant un système de conversion selon les caractéristiques de la revendication 1 et un système de conversion selon les caractéristiques de la revendication 2.

11. Procédé de conversion d'un signal S_{RX} radiofréquence reçu pour récupérer l'information encodée et portée par le signal S_{RX}, comprenant les étapes suivantes :
- on génère un signal S_{LO},
- on génère un signal S_{RX-LO} en mixant le signal S_{RX} avec le signal S_{LO},
- on convertit le signal S_{RX-LO} en un signal numérique S_{RX-LO-Num},
- on génère un signal numérique S_{Cor} de correction d'erreur reflétant l'écart de phase entre la phase du signal S_{LO} et une consigne de phase, la consigne de phase étant la phase d'un signal idéal S₀, idéal pour récupérer l'information encodée et portée par le signal S_{RX},
- on génère un signal S_{0'-Num} en combinant le signal S_{RX-LO-Num} avec le signal S_{Cor}.

12. Procédé de conversion d'un signal numérique S_{TX-Num} pour émettre un signal analogique S_{TX} radiofréquence portant l'information du signal S_{TX-Num}, comprenant les étapes suivantes :
- on génère un signal S_{LO},
- on génère un signal numérique S_{Cor} de correction d'erreur reflétant l'écart de phase entre la phase du signal S_{LO} et une consigne de phase, la consigne de phase étant la phase d'un signal idéal S₀, idéal pour transposer le signal S_{TX-Num}, à une fréquence requise en vue de son émission,
- on génère un signal numérique S_{TX-Cor-Num} en combinant le signal S_{TX-Num} avec le signal S_{Cor},
- on convertit le signal S_{TX-Cor-Num} en un signal analogique S_{TX-Cor},
- on génère un signal S_{TX} en mixant le signal S_{TX-Cor} avec le signal S_{LO}.

## Patentansprüche

1. System zur Umwandlung eines Radiofrequenzsignals S_{RX}, das empfangen wurde, um die verschlüsselte vom Signal S_{RX} getragenen Informationen zu erhalten, welches folgendes umfasst:
- Generierungsmittel (1), die so gestaltet sind, dass ein Signal S_{LO} generiert werden kann,
- Mischmittel (3), die so gestaltet sind, dass durch Mischen des Signals S_{RX} und dem Signal S_{LO} ein Signal S_{RX-LO} entsteht,
- einen analogen/digitalen Wandler (4), der so gestaltet ist, dass das Signal S_{RX-LO} in ein digitales Signal S_{RX-LO-Num} umgewandelt wird,
- eine Vorrichtung (10) die ein digitales Fehlerkorrektursignal S_{cor} generiert, wobei die Vorrichtung so gestaltet ist, dass das Signal S_{cor} die Phasenabweichung zischen der Phase von Signal S_{LO} und einem Phasensollwert anzeigt, wobei der Phasensollwert die Phase eines idealen Signals S₀, ist, ideal um die verschlüsselten und von Signal S_{RX} übermittelten Information durch zu erholen
um das Signal S_{RX-Num} auf eine für das Senden erforderliche Frequenz zu bringen,
- Kombinationsmittel (5), die so gestaltet sind, dass durch Kombinieren des Signals S_{RX-LO-Num} mit dem Signal S_{cor} das Signal S_{O'-Num} entsteht.

2. System zur Umwandlung eines digitalen Systems S_{TX-Num} zum Senden eines analogen Radiofrequenzsignals S_{TX}, das die Information des digitalen Signals S_{TX-Num} trägt, und welches folgendes umfasst:
- Generative Mittel (1), die so gestaltet sind, dass ein Signal S_{LO} generiert wird
- eine Vorrichtung (10), die ein digitales Fehlerkorrektursignal S_{cor} erzeugt, wobei die Vorrichtung so gestaltet ist, dass das Signal S_{cor} die Phasenabweichung zwischen der Phase von Signal S_{LO} und einem Phasensollwert anzeigt, wobei der Phasensollwert die Phase eines idealen Signals So ist, um das Signal S_{TX-Num} auf eine für das Senden erforderliche Frequenz zu bringen,
- Kombinationsmittel (25), die so gestaltet sind, dass durch Kombinieren des Signals S_{TX-Num} mit dem Signal S_{cor} das Signal S_{TX-Cor-Num} entsteht,
- ein digitaler/analoger Wandler (24), der so gestaltet ist, dass das digitale Signal S_{TX-Cor-Num} in ein analoges Signal S_{TX-Cor} umgewandelt wird,
- Mischmittel (23), die so gestaltet sind, dass durch Mischen des Signals S_{TX-Cor} mit dem Signal S_{LO} ein Signal S_{TX} entsteht.

3. Umwandlungssystem nach einem der vorhergehenden Ansprüche 1 oder 2, **dadurch gekennzeichnet, dass** es folgendes umfasst:
- Mittel zur Generierung eines Bezugssignals S_{Ref},
- Mittel zur Probennahme, deren Eingangssignal S_{LO} und S_{Ref} sind und die so gestaltet sind, dass ein digitales Signal S_{LO-Num}, die digitale Darstellung des Signals S_{LO}, geschaffen wird.

4. Umwandlungssystem nach dem vorhergehenden Anspruch, **dadurch gekennzeichnet, dass** die Probennahmemittel einen Phasenprobenehmer (12) enthalten und dadurch, dass das Signal S_{LO-Num} eine digitale Darstellung der Phase des Signals S_{LO} ist.

5. Umwandlungssystem nach Anspruch 3, **dadurch gekennzeichnet, dass** die Vorrichtung folgendes umfasst:
- mindestens einen Eingang, der so gestaltet ist, dass die Merkmale des idealen Signals S₀, empfangen werden können,
- mindestens einen Eingang, der so gestaltet ist, dass das digitale Signal S_{LO-Num} empfangen werden kann,
- Mittel zur sofortigen Berechnung von Phasenfehlern zwischen dem Signal S_{LO} und dem Signal S₀.
- Mittel zur Generierung des digitalen Signals S_{Cor}, das eine umgekehrte Phase besagten Phasenfehlers darstellt.

6. Umwandlungssystem nach einem der Ansprüche 3 bis 5, **dadurch gekennzeichnet, dass** die Vorrichtung (10) Filtermittel umfasst, die so gestaltet sind, dass sie das digitale Signal S_{Cor} filtern können.

7. Umwandlungssystem nach dem vorhergehenden Anspruch, **dadurch gekennzeichnet, dass** die digitalen Filtermittel mindesten einen digitalen Filter umfassen, dessen Durchlassbreite verstellbar ist.

8. Umwandlungssystem nach einem der Ansprüche 3 bis 5 und 7, **dadurch gekennzeichnet, dass** die Vorrichtung (10) Korrekturmittel umfasst, die so gestaltet sind, dass die Probennahmemittel bei Bedarf nachgebessert werden können.

9. Umwandlungssystem nach einem der vorhergehenden Ansprüche, **dadurch gekennzeichnet, dass** die Vorrichtung (10) Schnittstellenmittel umfasst, die so gestaltet sind, dass die Merkmale des idealen Signals S₀ verändert werden können.

10. System zur Umwandlung eines digitalen Signals, das ein analoges Radiofrequenzsignal empfangen und senden kann, ein Umwandlungssystem nach den Merkmalen von Anspruch 1 und ein Umwandlungssystem nach den Merkmalen von Anspruch 2 umfasst.

11. Verfahren zur Umwandlung eines, Radiofrequenzsignals S_{RX}, um die verschlüsselten und von Signal S_{RX} übermittelten Information durch zu erholen, welches folgende Schritte umfasst:
- man generiert ein Signal S_{LO},
- man generiert ein Signal S_{RX-LO} durch Mischen von Signal S_{RX} mit Signal S_{LO}.
- man wandelt das Signal S_{RX-LO} in ein digitales Signal S_{RX-LO-Num},
- man generiert ein digitales Fehlerkorrektursignal S_{Cor}, das die Phasenabweichung zwischen der Phase von Signal S_{LO} und einem Phasensollwert anzeigt, wobei der Phasensollwert die Phase eine idealen Signals S₀ ist, ideal insofern, als die verschlüsselte und von Signal S_{RX} übermittelten Information durch zu erholen.
- man generiert ein Signal S_{0'-Num,} indem man das Signal S_{RX-LO-Num} mit dem Signal S_{Cor} kombiniert.

12. Verfahren zur Umwandlung eines digitalen Signals S_{TX-Num} zum Senden eines analogen Radiofrequenzsignals S_{TX}, das die Information von Signal S_{TX-Num} trägt, welches folgende Schritte umfasst:
- man generiert ein Signal S_{LO},
- man generiert ein digitales Fehlerkorrektursignal S_{Cor}, das die Phasenabweichung zwischen der Phase von Signal S_{LO} und einem Phasensollwert aufzeigt, wobei der Phasensollwert die Phase eines idealen Signals So ist, ideal insofern, als das Signal S_{TX Num} zwecks Senden auf eine erforderliche Frequenz gebracht werden kann,
- man generiert ein digitales Signal S_{TX-Cor-Num} durch Kombinieren des Signals S_{TX-Num} mit dem Signal S_{Cor}
- man wandelt das Signal S_{TX-Cor-Num} in ein analoges Signal S_{TX-Cor}
- man generiert ein Signal S_{TX} indem man das Signal S_{TX-Cor} mit dem Signal S_{LO} kombiniert.

## Claims

1. A system for converting a received radiofrequency signal S_{RX} so as to recover encoded information carried by the signal S_{RX}, comprising:
- generating means (1) so arranged as to generate a signal S_{LO},
- mixing means (3) so arranged as to generate a signal S_{RX-LO} by mixing the signal S_{RX} with the signal S_{LO},
- an analog/digital converter (4) so arranged as to convert the signal S_{RX-LO} into a digital signal S_{RX-LO-Num},
- a device (10) generating an error correction digital signal S_{Cor}, with the device being so arranged that the signal S_{Cor} reflects the phase gap between the phase of the signal S_{LO} and a phase setpoint, with the phase setpoint being the phase of an ideal signal S₀, ideal for recovering the encoded information carried by the signal S_{RX},
- combining means (5) so arranged as to generate the signal S_{0'-Num} by combining the signal S_{RX-LO-Num} with the signal S_{Cor}.

2. A system for converting a digital signal S_{TX-Num} to send a radiofrequency analog signal S_{TX} carrying the information of the digital signal S_{TX-Num}, comprising:
- generating means (1) so arranged as to generate a signal S_{LO},
- a device (10) generating an error correction digital signal S_{Cor}, with the device being so arranged that the signal S_{Cor} reflects the phase gap between the phase of the signal S_{LO} and a phase setpoint, with the phase setpoint being the phase of an ideal signal So, ideal for converting the signal S_{TX-Num} into a frequency required for the sending thereof,
- combining means (25) so arranged as to generate the signal S_{TX-Cor-Num} by combining the signal S_{TX-Num} with the signal S_{Cor},
- a digital/analog converter (24) so arranged as to convert the digital signal S_{TX-Cor-Num} into an analog signal S_{TX-Cor-Num},
- mixing means (23) so arranged as to generate a signal S_{TX} by mixing the signal S_{TX-Cor} with the signal S_{LO}.

3. A conversion system according to any one of the preceding claims 1 or 2, **characterized in that** it comprises:
- means for generating a reference signal S_{Ref},
- sampling means wherein the signal S_{LO} and the signal S_{Ref} are input and so arranged as to generate a digital signal S_{LO-Num}, being a digital representation of the signal S_{LO}.

4. A conversion system according to the preceding claim, **characterized in that** the sampling means comprise a phase sampler (12) and **in that** the signal S_{-LO}-_{Num}, is a digital representation of the phase of the signal S_{LO}.

5. A conversion system according to claim 3, **characterized in that** the device comprises:
- at least one input so arranged as to receive the characteristics of the ideal signal S₀,
- at least one input so arranged as to receive the digital signal S_{LO-Num},
- means for calculating the instantaneous phase error between the signal S_{LO} and the signal S₀,
- means for generating the digital signal S_{Cor} having a phase inverse of said phase error.

6. A conversion system according to any one of claims 3 to 5, **characterized in that** the device (10) comprises filtering means so arranged as to filter the digital signal S_{Cor}.

7. A conversion system according to the preceding claim, **characterized in that** the digital filtering means comprise at least one digital filter, the spectral bandwidth of which is adjustable.

8. A conversion system according to any one of claims 3 to 5 and 7, **characterized in that** the device (10) comprises correction means so arranged as to correct the imperfections of the sampling means.

9. A conversion system according to any one of the preceding claims, **characterized in that** the device (10) comprises interface means so arranged as to vary the characteristics of the ideal signal S₀.

10. A system for converting a digital signal adapted to receive and send a radiofrequency analog signal comprising a conversion system according to the characteristics of claim 1 and a conversion system according to the characteristics of claim 2.

11. A method for converting a received radiofrequency signal S_{RX} to recover the encoded information carried by the signal S_{RX}, comprising the steps of:
- generating a signal S_{LO},
- generating a signal S_{RX-LO} by mixing the signal S_{RX} with the signal S_{LO},
- converting the signal S_{RX-LO} into a digital signal S_{RX-LO-Num},
- generating an error correction digital signal S_{Cor} reflecting the phase gap between the phase of the signal S_{LO} and a phase setpoint, with the phase setpoint being the phase of an ideal signal S₀, ideal for convering the encoded information carried by the signal S_{RX},
- generating a signal S_{0'-Num} by combining the signal S_{RX-LO-Num} with the signal S_{Cor}.

12. A method for converting a digital signal S_{TX-Num} to send an analog radiofrequency signal S_{TX} carrying the information of the signal S_{TX-Num}, comprising the steps of:
- generating a signal S_{LO},
- generating an error correction digital signal S_{Cor} reflecting the phase gap between the phase of the signal S_{LO} and a phase setpoint, with the phase setpoint being the phase of an ideal signal S₀, ideal for transposing the signal S_{TX-Num} into a frequency required for the sending thereof,
- generating a digital signal S_{TX-Car-Num} by combining the signal S_{TX-Num} with the signal S_{Cor},
- converting the signal S_{TX-Cor-Num} into an analog signal S_{TX-Cor},
- generating a signal S_{TX} by mixing the signal S_{TX-Cor} with the signal S_{LO}.
